(19) Europäisches Patentamt
European Patent Office
Office européen des brevets

(11) EP 4 204 478 B1

(12) **EUROPEAN PATENT SPECIFICATION**

(45) Date of publication and mention of the grant of the patent:
**20.03.2024 Bulletin 2024/12**

(21) Application number: **20808372.5**

(22) Date of filing: **17.11.2020**

(51) International Patent Classification (IPC):
***C08G 77/12*** $^{(2006.01)}$ ***C08G 77/20*** $^{(2006.01)}$
***C08L 83/04*** $^{(2006.01)}$ ***H01B 3/46*** $^{(2006.01)}$
***H01B 7/295*** $^{(2006.01)}$

(52) Cooperative Patent Classification (CPC):
(C-Sets available)
**C08G 77/12; C08G 77/20; C08L 83/04; H01B 7/295**

(Cont.)

(86) International application number:
**PCT/EP2020/082423**

(87) International publication number:
**WO 2022/105988 (27.05.2022 Gazette 2022/21)**

(54) **SILICONE COMPOSITION, METHOD OF MAKING THE SAME, AND CABLE MADE FROM THE SAME**

SILIKONZUSAMENSETZUNG, VERFAHREN ZUR HERSTELLUNG UND DARAUS HERGESTELLTE KABELN

COMPOSITION DE SILICONE, MÉTHODE DE PRÉPARATION ET CÂBLE PRÉPARÉ À PARTIR DE CETTE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2023 Bulletin 2023/27**

(73) Proprietor: **Wacker Chemie AG**
**81737 München (DE)**

(72) Inventors:
- **KLINGBERG, Detlef**
  **Sylvania, Ohio 43560 (US)**
- **KAMYSZEK, Todd**
  **Uniontown, Ohio 44685 (US)**

(74) Representative: **Belz, Ferdinand et al**
**Wacker Chemie AG**
**Hanns-Seidel-Platz 4**
**81737 München (DE)**

(56) References cited:
**EP-A1- 0 467 800**
**WO-A2-2007/115834**
**CN-A- 108 192 354**
**US-A1- 2016 289 416**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

(Cont. next page)

(52) Cooperative Patent Classification (CPC): (Cont.)

C-Sets
**C08L 83/04, C08K 3/22, C08K 5/14, C08K 5/56, C08L 83/00;**
**C08L 83/04, C08K 3/22, C08K 5/14, C08L 83/00;**
**C08L 83/04, C08K 3/22, C08K 5/56, C08L 83/00**

## Description

The invention relates in general to a silicone composition. The invention also relates to a method for making the silicone composition and members made from the same.

Silicone materials are utilized in many applications including insulating and fire safety applications. In some fire safety applications, it is desired that the materials being used are resilient. However, these materials typically do not exhibit high heat reflection. Alternatively, materials utilized to provide excellent heat reflection in such applications are often rigid. Additionally, the materials known for use in such applications are often difficult to process.

Patent document CN 108 192 354 (A) describes a curable silicone composition used for the insulation of a wire cable and able to form a ceramic material when heated at very high temperature, namely at fire temperature. In one particular embodiment, the silicone composition comprises 100 parts of a silicone rubber comprising vinyl groups, 150 parts of silica, 30 parts by weight of mica powder, 25 parts of alumina, 5 parts by weight of titanium dioxide, 8 parts of a silicone oil comprising silanol groups and a platinum-vinyl complex as hydrosilylation catalyst. After mixing all the components, a silicone gel is formed to which an organo-peroxide compound is added in order to further cure the composition. The amount of heat insulating filler comprising at least two different heat insulating fillers, such as mica may be present in the composition at a level of 30 to 70 parts by weight.

Patent document EP 0 467 800 (A1) discloses a curable silicone composition used for insulating electric cables able to form a ceramicised material under fire conditions. In one specific embodiment, the composition comprises 100 parts of a silicone rubber comprising vinyl groups, 49 parts of silica, 5 parts by weight of mica powder, 1 part by weight of titanium dioxide, 4 parts of a silicone oil comprising silanol groups and a platinum compound as hydrosilylation catalyst (acid chloroplatinique). After mixing all the components, an organo-peroxide compound is added in order to further cure the composition. Mica may be present in the composition at a level of 0.5 to 39.8 parts by weight for 100 parts of organopolysiloxane.

Patent document US 2016/289416 (A1) describes a curable silicone composition for the production of casings or insulators to form electrical wires or cables protected against fire. The compositions comprise 100 parts by weight of an organopolysiloxane comprising alkenyl groups, 0.5-250 parts by weight of a mineral, a platinum complex, a hardening component, 0-250 parts by weight of at least one refractory filler and 0-300 parts by weight of a fireproofing mineral filler such as magnesium oxide. The hardener is preferably an organic peroxide and the refractory filler may be mica. H

Patent document WO 2007/115834 (A2) relates to polyorganopolysiloxane compositions which can be hot-vulcanised (100-200°C) to form silicone elastomers for the preparation of fire-protected electrical cables or wires. The compositions comprise 100 parts by weight of an organopolysiloxane comprising alkenyl groups, an organopolysiloxane oil comprising terminal silanol groups, 33 parts by weight of silica, 1.8 parts by weight of mica, zinc oxide, titanium oxide and a platinum complex comprising alkenyl groups. The ingredients are mixed and then brought in contact with an organic peroxide. The description indicates the presence of mica in an amount of 0.5-30 parts by weight based on 100 parts by weight of polysiloxane.

Therefore, it would be desirable to provide a composition that overcomes the aforementioned deficiencies.

Embodiments of a composition are provided. In an embodiment, the composition comprises a peroxidically crosslinked or a condensation crosslinked organopolysiloxane material. The composition comprises a silicone polymer. Also, the composition comprises at least one of a metal oxide, a metal containing compound, boric acid, or zinc borate. When present, the metal oxide is selected from a group consisting of magnesium oxide, aluminum oxide, tin oxide, calcium oxide, titanium oxide and barium oxide. When present, the metal-containing compound produces a metal oxide of the group on heating. The composition comprises a platinum complex containing at least one unsaturated group and 33-100 parts by weight of mica based on 100 parts by weight of the organopolysiloxane material. The composition produces a ceramic material at temperatures of 610 °C or more.

In some embodiments, the organopolysiloxane material comprises a peroxide crosslinking agent. In other embodiments, the organopolysiloxane material is elastomeric and comprises a vinyl-functional organopolysiloxane and a hydroxyl-functional organopolysiloxane.

In other embodiments, the mica is of the formula $KAl_2(F, OH)_2$ or $(KF)_2(Al_2O_3)_3(SiO_2)_6$.

In still other embodiments, the silicone polymer is a vinylmethyl polydimethylsiloxane.

In some embodiments, the platinum complex is a platinum-vinyl siloxane complex. In one such embodiment, the platinum-vinyl siloxane complex is a platinum-1,3-divinyl-1,1,3,3-tetramethyldisiloxane complex.

In certain embodiments, the metal oxide is aluminum oxide. In an embodiment where the metal oxide is aluminum oxide, the platinum complex is a platinum-vinyl siloxane complex.

In certain embodiments, the composition further comprises a reinforcing filler, a nonreinforcing filler, or mixture thereof. In an embodiment, the reinforcing filler comprises silica.

Embodiments of a process for preparing the composition are also provided. In one such embodiment, the process comprises mixing components of the composition.

Additionally, embodiments of a cable and embodiments of a profile, each comprising the composition are

provided.

It is to be understood that the invention may assume various alternative compositions and step sequences, except where expressly specified to the contrary. It is also to be understood that the specific components, members, and methods described in the following specification are simply exemplary embodiments of the inventive concepts. Hence, specific properties, conditions, or other physical characteristics relating to the embodiments disclosed are not to be considered as limiting, unless expressly stated otherwise.

In an embodiment, a composition is provided. In some embodiments, the composition is ceramifyable. For example, the composition may produce a ceramic material at elevated temperatures, which are preferably of 610 °C or more. The composition is suitable for use in fire safety applications such as, for example, insulation for electrical conductors. However, the composition may also be suitable in other application such as, for example, for use in profiles or forming other members.

Preferably, the composition comprises an organopolysiloxane material. In some embodiments, the organopolysiloxane material may be composed of units of the general formula (I)

$$R_r SiO_{\frac{4-r}{2}} \qquad \text{(I)}$$

where R may be identical or different and are unsubstituted or substituted hydrocarbon radicals, and
r is 0, 1, 2 or 3 and has an average numerical value of from 1.9 to 2.1.

Examples of hydrocarbon radicals R are alkyl radicals such as the methyl, ethyl, n-propyl, isopropyl, n-butyl, isobutyl, tert-butyl, n-pentyl, isopentyl, neopentyl or tert-pentyl radicals, hexyl radicals such as the n-hexyl radical, heptyl radicals such as the n-heptyl radical, octyl radicals such as the n-octyl radical and isooctyl radicals such as the 2,2,4-trimethylpentyl radical, nonyl radicals such as the n-nonyl radical, decyl radicals such as the n-decyl radical, dodecyl radicals such as the n-dodecyl radical, octadecyl radicals such as the n-octadecyl radical; cycloalkyl radicals such as cyclopentyl, cyclohexyl and cycloheptyl radicals and methylcyclohexyl radicals; aryl radicals such as the phenyl, biphenyl, naphthyl, anthryl and phenanthryl radicals; alkaryl radicals such as o-, m- or p-tolyl radicals, xylyl radicals and ethylphenyl radicals; and aralkyl radicals such as the benzyl radical and the $\alpha$- and the $\beta$-phenylethyl radicals.

Examples of substituted hydrocarbon radicals R are halogenated alkyl radicals, such as the 3-chloropropyl radical, the 3,3,3-trifluoropropyl radical and the perfluorohexylethyl radical, and halogenated aryl radicals, such as the p-chlorophenyl radical and the p-chlorobenzyl radical.

Other examples of radicals R are the vinyl, allyl, methallyl, 1-propenyl, 1-butenyl and 1-pentenyl radicals, and the 5-hexenyl, butadienyl, hexadienyl, cyclopentenyl, cyclopentadienyl, cyclohexenyl, ethynyl, propargyl and 1-propynyl radicals.

The radicals R are preferably hydrogen atoms or hydro-carbon radicals having from 1 to 8 carbon atoms, particularly preferably the methyl radical. In some embodiments, it may be preferred that the radicals R are alkenyl radicals having from 2 to 8 carbon atoms, particularly preferably the vinyl radical. Among unsubstituted or substituted hydrocarbon radicals having from 1 to 8 carbon atoms, particular preference is given to the methyl, vinyl, phenyl or 3,3,3-trifluoropropyl radical.

Preferably, alkyl radicals, in particular methyl radicals, are bonded to at least 70 mol-% of the Si atoms present in the organopolysiloxane material composed of units of the formula (I). If the organopolysiloxane material contains, in addition to Si-bonded methyl and/or 3,3,3-trifluoropropyl radicals, Si-bonded vinyl and/or phenyl radicals, the amounts of these latter are preferably from 0.001 to 30 mol-%.

Preferably, the organopolysiloxane material may be composed predominantly of diorganosiloxane units. The end groups of the organopolysiloxanes may be trialkylsiloxy groups, in particular the trimethylsiloxy radical or the dimethylvinyl-siloxy radical. However, it is also possible for one or more of these alkyl groups to have been replaced by hydroxyl groups or alkoxy groups, such as methoxy or ethoxy radicals. In some embodiments, the organopolysiloxane material may comprise a mixture of organosiloxanes. For example, in certain embodiments, the organopolysiloxane material may comprise a vinyl-functional organopolysiloxane and a hydroxyl-functional organopolysiloxane.

The organopolysiloxane material may be a liquid or a high-viscosity substance. The organopolysiloxane material preferably has a viscosity of from $10^3$ to $10^8$ $mm^2/s$ at 25 °C.

The organopolysiloxane material is peroxidically crosslinked or a condensation crosslinked. Suitable crosslinking agents are utilized to crosslink the organopolysiloxane material. In some embodiments, a peroxide crosslinking agent is utilized to crosslink the organopolysiloxane material. Suitable peroxide crosslinking agents preferably comprise peroxides such as, for example, dibenzoyl peroxide, bis(2,4-dichlorobenzoyl) peroxide, dicumyl peroxide or 2,5-bis(tert-butylperoxy)-2,5-dimethylhexane, or else mixtures of these, preferably bis(2,4-dichlorobenzoyl) peroxide or 2,5-bis(tert-butylperoxy)-2,5-dimethyl-hexane. Preferably, the crosslinking agent comprises a mixture of bis(4-methylbenzoyl) peroxide (PMBP) and 2,5-dimethyl-2,5-di-tert-butylhexane peroxide (DHBP) in a ratio of from 1 : 0.4 to 0.5 : 1, preferably

in a ratio of 1 : 0.4.

The organopolysiloxanes (A) according to the invention preferably also comprise reinforcing and/or nonreinforcing fillers. Examples of reinforcing fillers are pyrogenic or precipitated silicas with BET surface areas of at least 50 $m^2/g$. The silica fillers mentioned may have hydrophilic properties or may have been hydrophobicized by known processes such as the one described in, for example, U.S. Patent No. 5,057,151. In such cases the hydrophobicization is generally carried out using from 1 to 20 % by weight of hexamethyldisilazane and/or divinyltetramethyldisilazane and from 0.5 to 5 % by weight of water, based in each case on the total weight of the organopolysiloxane material. These reagents are advantageously fed to a suitable mixing apparatus, e.g., a kneader or internal mixer, in which there is an initial charge of the organopolysiloxane material, prior to gradual incorporation of the reinforcing filler.

Examples of non-reinforcing fillers are powdered quartz, diatomaceous earth, calcium silicate, zirconium silicate, zeolites, metal oxide powders, such as aluminum oxide, titanium oxide, iron oxide or zinc oxide, barium silicate, barium sulfate, calcium carbonate, gypsum, and also synthetic polymer powders, such as polyacrylonitrile powder or polytetrafluoroethylene powder. The fillers used may also comprise fibrous components, such as glass fibers or synthetic polymer fibers. The BET surface area of these fillers is preferably less than 50 $m^2/g$.

The amount of filler present in the organopolysiloxane material is preferably from 1 to 200 parts by weight, particularly preferably from 30 to 100 parts by weight, based in each case on 100 parts by weight of organopolysiloxane material.

Depending on the particular application, additives, such as workability aids, for example plasticizers, pigments, or stabilizers, e.g. heat stabilizers, may be added to the organopolysiloxane material, which can be crosslinked or vulcanized to give an elastomer. Examples of plasticizers which may be used as additives are polydimethylsiloxanes terminated by trimethylsilyl groups, silanol groups, or vinyl siloxanes, and diphenylsilanediol. Combinations of plasticizers like those mentioned may also be utilized. Examples of heat stabilizers which may be used as additives are transition metal salts of fatty acids such as iron octoate, transition metal silanolates such as iron silanolate, and cerium(IV) compounds. The organopolysiloxane material used may also be a conventional condensation-crosslinking organopolysiloxane, as described, for example, in EP0359251, or other known addition-crosslinking materials.

Each of the components used to prepare the organopolysiloxane material may be of the single material type or a mixture of two or more different materials, which together form the component. In some embodiments, the organopolysiloxane material comprises no additional components other than those described above. For example, in one such embodiment, the organopolysiloxane material is free of hydrophobic metal nitrides and carbides.

Preferably, the composition comprises a silicone polymer. Preferably, the silicone polymer is a vinylmethylpolydimethylsiloxane. In certain embodiments, the silicone polymer comprises at least one vinyldimethylsiloxane end unit. In these embodiments, the vinylmethylpolydimethylsiloxane may be of the formula

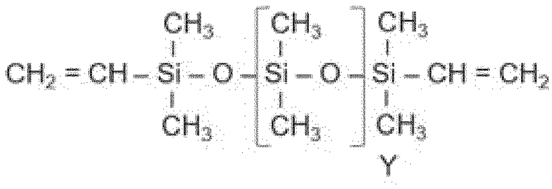

where Y is 1,000 to 10,000 siloxane units, preferably, about 7,500 to 10,000 units. In other embodiments, the silicone polymer comprises at least one vinylmethylsiloxane unit included in the main polymer chain. In these embodiments, the vinylmethylpolydimethylsiloxane may be of the formula

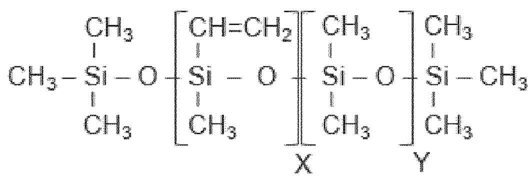

where X+Y equals about 500 to 10,000 siloxane units, preferably, about 7,500 to 10,000 units. In still other embodiments, the silicone polymer comprises at least one vinyldimethylsiloxane end unit and at least one vinylmethylsiloxane unit included in the main polymer chain. In these embodiments, the vinylmethylpolydimethylsiloxane may be of the formula

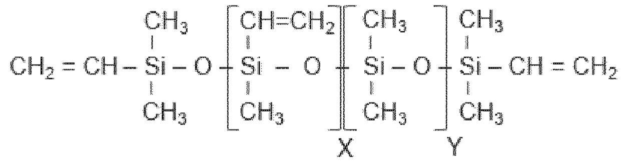

where X+Y equals about 500 to 10,000 siloxane units, preferably, about 7,500 to 10,000 units. Mixtures of the vinylmethylpolydimethylsiloxanes described above can also be utilized. Preferably, in these embodiments, a vinyl group is provided per every 500-10,000 siloxane units. In some embodiments, a vinyl group is provided per every 1000-5000 siloxane units. In one such embodiment, a vinyl group is provided per every 1200 siloxane units. In other embodiments, the silicone polymer is a dimethylpolydimethylsiloxane comprising at least one saturated end unit. In these embodiments, the dimethylpolydimethylsiloxane may be of the formula

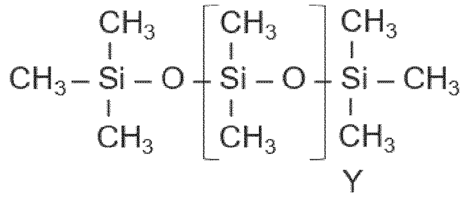

where Y is 1,000 to 10,000 siloxane units, preferably, about 7,500 to 10,000 units.

The composition comprises at least one of a metal oxide, a metal containing compound, boric acid, or zinc borate. When present, the metal oxide is selected from a group consisting of magnesium oxide, aluminum oxide, tin oxide, calcium oxide, titanium oxide and barium oxide. When present, the metal-containing compound produces a metal oxide of the group on heating. Examples of such metal-containing compounds include, for example, metal hydroxides. In some embodiments, the components mentioned above are provided in the composition in an amount of from 1.5 to 40 % by weight, based always on the total weight of the composition, preferably from 10 to 20 % by weight. Mixtures of at least one of the metal oxides described above, metal-containing compounds, boric acid, and zinc borate may also be used.

The composition comprises a platinum complex containing at least one unsaturated group. Preferably, the unsaturated group is a hydrocarbon group. Examples of preferable platinum complexes include platinum-olefin complexes, platinum-aldehyde complexes, platinum-ketone complexes, platinum-vinyl siloxane complexes or platinum-1,3-diviny1-1,1,3,3-tetramethyldisiloxane complexes with or without any detectable content of organic halogen, platinum-norbornadiene-methylacetonate complexes, bis(gamma-picoline)platinum dichloride, trimethylenedi-pyridineplatinum dichloride, dicyclopentadieneplatinum dichloride, (dimethylsulfoxide)(ethylene)platinum(II) dichloride, reaction products of platinum tetrachloride with olefins and with primary amines, secondary amine, or both primary and secondary amines for example the reaction product of sec-butylamine with platinum tetrachloride dissolved in 1-octene. In certain embodiments, the platinum complex is a platinum-vinyl siloxane complex. Preferably, the platinum-vinyl siloxane complex is a platinum-1,3-divinyl-1,1,3,3-tetramethyldisiloxane complex. However, other platinum-vinyl siloxane complexes may be suitable. The amounts of the platinum complex used are from 5 to 200 ppm, preferably from 10 to 100 ppm. The amount is based on elemental platinum. It is also possible to use mixtures of the platinum complexes in the composition.

The composition comprises mica. Mica may be in the of muscovite or phlogopite variety. Preferably, the mica is of the muscovite variety. In these embodiments, the mica may be of the formula $KAl_2(F, OH)_2$ or $(KF)_2(Al_2O_3)_3(SiO_2)_6$. In some embodiments, the composition comprises at least 33 parts by weight of mica based on 100 parts by weight of the organopolysiloxane material. In one such embodiment, the composition comprises 33-100 parts by weight of mica based on 100 parts by weight of the organopolysiloxane material. In other embodiments, the composition comprises 50-100 parts by weight of mica based on 100 parts by weight of the organopolysiloxane material. In other embodiments, the composition comprises 65-100 parts by weight of mica based on 100 parts by weight of the organopolysiloxane material.

Preferably, mica is provided as fine powder. In some embodiments, the mica may have a D50 value, which is a value representing the particle size distribution of the mica, of 1-75 $\mu$m. In one such embodiment, the mica may have a D50 value of 25 $\mu$m. The mica may also have a desirable aspect ratio (Jennings Factor). For example, the mica may have an aspect ratio of 80.

In certain embodiments, the composition may be formed by a process that comprises mixing the components mentioned above. The components can be mixed in a device such as, for example, an internal mixer or another suitable mixing device. In these embodiments, it is preferred that the mica is added to the mixture in two or more portions. For

example, in certain embodiments, mica may be added in equal portions to the mixture. In other embodiments, the portions of mica added to the mixture may not be equal to each other. In these embodiments, mica may be added in portions that are equivalent to 1-30 parts per hundred parts of the mixture. In some embodiments, the mixture may already comprise the other components mentioned above before the mica is added. In these embodiments, mica may be added in portions of not more than 10 kilograms (kg) or in portions of greater than 10 kg.

After mixing, the mixture is cured. The mixture is cured for a predetermined time. In some embodiments, the composition is formed by curing the mixture at an ambient temperature. The time it takes for the mixture to be cured can be reduced by heating the mixture. In certain embodiments, the mixture can be heated to a temperature of 25-250 °C for curing. Preferably, the mixture is cured at a temperature in the range of about 40 °C to about 200 °C. Other curing mechanisms such as, for example, moisture curing, peroxide curing, and radiation curing may be utilized to form the composition.

Preferably, curing results in the composition being elastomeric. Also, after curing, the composition permits sintering to start at temperatures as low as 610 °C. In certain embodiments, this property allows the composition to produce a ceramic material at temperatures of 610 °C or more. The ceramic material may be formed as a layer and enable the composition to retain function in the event of being exposed to fire. When the composition exhibits a low density, the composition also exhibits a higher level of mechanical properties, better heat-ageing properties, and greater insulating capabilities than conventional silicone compositions, especially when exposed to high temperatures such as, for example, in temperatures above 900 °C. The ceramic material formed in the event of fire is moreover significantly more resistant to impact and shock than are the mixtures described in the prior art, which merely form a stable ash layer.

The composition may exhibit the same electrical and heat-ageing properties as known silicone rubber compositions. Further, the composition exhibits excellent mechanical properties. For example, in certain embodiments, the composition exhibits a tensile strength of 400 psi or more. In one such embodiment, the composition exhibits a tensile strength of 400-1200 psi. The tensile strength of the composition can be measured according to ASTM D 412 using a tensile tester. An example of a tensile tester suitable for use in measuring the tensile strength of the composition according to ASTM D 412 is a TensiTech III tester manufactured by Tech-Pro, Inc. In some embodiments, the composition exhibits an elongation at break of 100 percent or more. In other embodiments, the composition exhibits an elongation at break of 200 percent or more. Preferably, the composition exhibits an elongation at break of 200-400 percent. The elongation of the composition can be measured according to ASTM D412 and when measuring tensile strength. In some embodiments, the composition exhibits a Shore A hardness of 50 or more. In these embodiments, the composition may exhibit a Shore A hardness of 70 or more. Preferably, the composition exhibits a Shore A hardness of 70-100. The Shore A hardness of the composition can be measured according to ASTM D 2240 using a durometer. An example of a durometer suitable for measuring Shore A hardness according to ASTM D 2240 is a handheld Durometer Type A sold by Instron. In still other embodiments, the composition exhibits a tear strength of 100 N/mm or more. In these embodiments, the composition may exhibit a tear strength of 100-150 pounds per inch. The tear strength of the composition can be measured according to ASTM D 624, test die B specimens using a TensiTech III tester manufactured by Tech-Pro, Inc. Additionally, the composition may exhibit a desirable specific gravity of, for example, 1.40-1.60. The specific gravity of the composition can be measured according to ASTM D 792 using a hydrostatic specific gravity tester. An example of a hydrostatic specific gravity tester suitable for measuring specific gravity according to ASTM D 792 is a SECURA224-1S analytical scale fitted with a density analytical balance kit manufactured and sold by the Sartorius Group.

As noted above, the compostion exhibits good mechanical, heat-ageing, and insulating properties. Additionally, the composition may also exhibit excellent elastomeric and/or heat reflective properties. Thus, the composition has a wide range of applications including fire safety applications. The composition is also workable and easy to use in known processes such as, for example, extrusion processes. Because of these properties, the composition can be utilized to form cables and profiles, which comprise the composition. The cables may be communication or energy cables. The profiles may be foams or compact gaskets for fire-resistant screening for rooms, cabinets or safes, or layers for ablation control in the lining of rocket engines or in other aerospace systems.

## Examples

The following examples are presented solely for the purpose of further illustrating and disclosing the embodiments of the composition. Example 2, which is described below, illustrates an embodiment of the composition within the scope of the invention.

### Example 1

100 parts of a diorganopolysiloxane end-capped by trimethylsiloxy groups, composed of 99.93 mol percent of dimethylsiloxane units and 0.07 mol percent of vinylmethylsiloxane units and having a viscosity of $8*10^6$ mPa*s at 25 °C. are mixed in a kneader operated at 150 °C., first with 50 parts of silicon dioxide produced pyrogenically in the gas

phase and having a surface area of 200 $m^2/g$, then with 1 part of dimethylpolysiloxane end-capped by trimethylsiloxy groups and having a viscosity of 96 mPa*s at 25 °C., next with 7 parts of a dimethylpolysiloxane having an Si-bonded hydroxyl group in each terminal unit and having a viscosity of 40 mPa*s at 25 °C., with 36 parts of aluminum oxide having a particle size >10 μ and having an alkali metal oxide content of <0.5 % by weight, and 0.3 % by weight of a platinum-1,3-diviny1-1,1,3,3-tetramethyldisiloxane complex.

**Example 2**

Next, 85 parts by weight of Example 1 was mixed with 15 parts by weight of ELASTOSIL® V 1200 A, which is manufactured and sold by Wacker Chemie AG, using an internal 75 liter mixer, which was a Kneader Machinery model KD75-250. Adequate mixing time was applied to achieve a uniform blend. 70 parts by weight of mica (IMERYS Suzorite® 325-HK) and 0.6 parts by weight of a peroxide crosslinking agent (Varox® DBPH, Vanderbilt Chemicals) were also added. The mica is added in three equal portions over time with mixing between each addition. After all of the mica was added to the mixture, the crosslinking agent was added and mixed until the composition is uniform.

The composition of Example 2 was cured for 10 minutes at 350 °F. After curing, the composition of Example 2 exhibited a specific gravity of 1.48, a tensile strength of 562 psi, an elongation at break of 252 percent, a Shore A hardness of 75, and a tear strength of 122 pounds per inch. The specific gravity, tensile strength at break, elongation at break, Shore A hardness, and tear strength were determined according to the methods specified above.

From the foregoing detailed description, it will be apparent that various modifications, additions, and other alternative embodiments are possible without departing from the true scope and spirit. The embodiments discussed herein were chosen and described to provide the best illustration of the principles of the invention and its practical application to thereby enable one of ordinary skill in the art to use the invention in various embodiments and with various modifications as are suited to the particular use contemplated. As should be appreciated, all such modifications and variations are within the scope of the invention.

**Claims**

1. A composition comprising:

   (a) a peroxidically crosslinked or a condensation crosslinked organopolysiloxane material;
   (b) a silicone polymer;
   (c) at least one of a metal oxide selected from a group consisting of magnesium oxide, aluminum oxide, tin oxide, calcium oxide, titanium oxide and barium oxide, a metal-containing compound which produces a metal oxide of the group on heating, boric acid, or zinc borate;
   (d) a platinum complex containing at least one unsaturated group; and
   (e) 33-100 parts by weight of mica based on 100 parts by weight of the organopolysiloxane material,
   wherein the composition produces a ceramic material at temperatures of 610 °C or more.

2. The composition of claim 1, wherein the organopolysiloxane material comprises a peroxide crosslinking agent.

3. The composition of claim 1, wherein the mica is of the formula $KAl_2(F, OH)_2$ or $(KF)_2(Al_2O_3)_3(SiO_2)_6$.

4. The composition of claim 1, wherein the silicone polymer is a vinylmethyl polydimethylsiloxane

5. The composition of claim 1, wherein the platinum complex is a platinum-vinyl siloxane complex.

6. The composition of claim 5, wherein the platinum-vinyl siloxane complex is a platinum-1,3-divinyl-1,1,3,3-tetramethyldisiloxane complex.

7. The composition of claim 1, wherein the organopolysiloxane material is elastomeric and comprises a vinyl-functional organopolysiloxane and a hydroxyl-functional organopolysiloxane.

8. The composition of claim 1, wherein said metal oxide is aluminum oxide.

9. The composition of claim 8, wherein said metal oxide is aluminum oxide and the platinum complex is a platinum-vinyl siloxane complex.

**10.** The composition of claim 1, further comprising a reinforcing filler, a nonreinforcing filler, or mixture thereof.

**11.** The composition of claim 11 wherein the reinforcing filler comprises silica.

**12.** The composition of claim 1, wherein the composition comprises 50-100 parts by weight of mica, preferably 65-100 parts by weight of mica, based on 100 parts by weight of the organopolysiloxane material.

**13.** The composition of claim 1, wherein the composition exhibits a specific gravity of 11.40-1.60 measured according to ASTM D 792.

**14.** A process for preparing a composition as claimed in claim 1 comprising mixing components (a) through (e).

**15.** A cable wherein the insulation of the conductors comprises the crosslinked composition of claim 1.

**16.** A profile which comprises the crosslinked composition of claim 1.

## Patentansprüche

**1.** Zusammensetzung, umfassend:

(a) ein peroxidisch vernetztes oder kondensationsvernetztes Organopolysiloxanmaterial;
(b) ein Silikonpolymer;
(c) mindestens einen der folgenden Stoffe: ein Metalloxid aus der Gruppe bestehend aus Magnesiumoxid, Aluminiumoxid, Zinnoxid, Calciumoxid, Titanoxid und Bariumoxid, eine metallhaltige Verbindung, die beim Erhitzen ein Metalloxid der Gruppe bildet, Borsäure oder Zinkborat;
(d) einen Platinkomplex, der mindestens eine ungesättigte Gruppe enthält; und
(e) 33-100 Gewichtsteile Glimmer, bezogen auf 100 Gewichtsteile des Organopolysiloxanmaterials,
wobei die Zusammensetzung bei Temperaturen von 610 °C oder mehr ein Keramikmaterial bildet.

**2.** Zusammensetzung nach Anspruch 1, wobei das Organopolysiloxanmaterial einen Peroxid-Vernetzer umfasst.

**3.** Zusammensetzung nach Anspruch 1, wobei der Glimmer die Formel $KAl_2(F,OH)_2$ oder $(KF)_2(Al_2O_3)_3(SiO_2)_6$ aufweist.

**4.** Zusammensetzung nach Anspruch 1, wobei es sich bei dem Silikonpolymer um ein Vinylmethylpolydimethylsiloxan handelt.

**5.** Zusammensetzung nach Anspruch 1, wobei es sich bei dem Platinkomplex um einen Platin-Vinylsiloxan-Komplex handelt.

**6.** Zusammensetzung nach Anspruch 5, wobei es sich bei dem Platin-Vinylsiloxan-Komplex um einen Platin-1,3-Divinyl-1,1,3,3-tetramethyldisiloxan-Komplex handelt.

**7.** Zusammensetzung nach Anspruch 1, wobei das Organopolysiloxanmaterial Elastomer ist und ein vinylfunktionelles Organopolysiloxan und ein hydroxylfunktionelles Organopolysiloxan umfasst.

**8.** Zusammensetzung nach Anspruch 1, wobei es sich bei dem Metalloxid um Aluminiumoxid handelt.

**9.** Zusammensetzung nach Anspruch 8, wobei es sich bei dem Metalloxid um Aluminiumoxid handelt und es sich bei dem Platinkomplex um einen Platin-Vinylsiloxan-Komplex handelt.

**10.** Zusammensetzung nach Anspruch 1, ferner umfassend einen verstärkenden Füllstoff, einen nicht verstärkenden Füllstoff oder eine Mischung davon.

**11.** Zusammensetzung nach Anspruch 11, wobei der verstärkende Füllstoff Kieselsäure umfasst.

**12.** Zusammensetzung nach Anspruch 1, wobei die Zusammensetzung 50-100 Gewichtsteile Glimmer, vorzugsweise

65-100 Gewichtsteile Glimmer, bezogen auf 100 Gewichtsteile des Organopolysiloxanmaterials, umfasst.

**13.** Zusammensetzung nach Anspruch 1, wobei die Zusammensetzung ein spezifisches Gewicht von 1,40-1,60, gemessen gemäß ASTM D 792, aufweist.

**14.** Verfahren zur Herstellung einer Zusammensetzung gemäß Anspruch 1, umfassend das Mischen der Komponenten (a) bis (e).

**15.** Kabel, wobei die Isolierung der Leiter die vernetzte Zusammensetzung nach Anspruch 1 umfasst.

**16.** Profil, das die vernetzte Zusammensetzung nach Anspruch 1 umfasst.

**Revendications**

**1.** Composition comprenant :

(a) un matériau d'organopolysiloxane réticulé de manière peroxydique ou un matériau d'organopolysiloxane réticulé par condensation ;
(b) un polymère de silicone ;
(c) au moins l'un parmi un oxyde métallique choisi dans un groupe constitué par l'oxyde de magnésium, l'oxyde d'aluminium, l'oxyde d'étain, l'oxyde de calcium, l'oxyde de titane et l'oxyde de baryum, un composé contenant un métal qui produit un oxyde métallique du groupe par chauffage, acide borique ou borate de zinc ;
(d) un complexe du platine contenant au moins un groupe insaturé ; et
(e) 33 à 100 parties en poids de mica sur la base de 100 parties en poids du matériau d'organopolysiloxane, la composition produisant un matériau de céramique à des températures de 610 °C ou plus.

**2.** Composition selon la revendication 1, le matériau d'organopolysiloxane comprenant un agent de réticulation de type peroxyde.

**3.** Composition selon la revendication 1, le mica étant de la formule $KAl_2(F, OH)_2$ ou $(KF)_2(Al_2O_3)_3(SiO_2)_6$.

**4.** Composition selon la revendication 1, le polymère de silicone étant vinylméthyle polydiméthylsiloxane.

**5.** Composition selon la revendication 1, le complexe du platine étant un complexe platine-vinylsiloxane.

**6.** Composition selon la revendication 5, le complexe platine-vinylsiloxane étant un complexe platine-1,3-divinyl-1,1,3,3-tétraméthyldisiloxane.

**7.** Composition selon la revendication 1, le matériau d'organopolysiloxane étant élastomérique et comprenant un organopolysiloxane fonctionnalisé par vinyle et un organopolysiloxane fonctionnalisé par hydroxyle.

**8.** Composition selon la revendication 1, ledit oxyde métallique étant l'oxyde d'aluminium.

**9.** Composition selon la revendication 8, ledit oxyde métallique étant l'oxyde d'aluminium et le complexe du platine étant un complexe platine-vinylsiloxane.

**10.** Composition selon la revendication 1, comprenant en outre une charge de renforcement, une charge non de renforcement ou un mélange correspondant.

**11.** Composition selon la revendication 11, la charge de renforcement comprenant une silice.

**12.** Composition selon la revendication 1, la composition comprenant 50 à 100 parties en poids de mica, préférablement 65 à 100 parties en poids de mica, sur la base de 100 parties en poids du matériau d'organopolysiloxane.

**13.** Composition selon la revendication 1, la composition présentant une gravité spécifique de 1,40 à 1,60 mesurée selon la norme ASTM D 792.

**14.** Procédé pour la préparation d'une composition selon la revendication 1 comprenant le mélange des composants (a) à (e).

**15.** Câble dans lequel l'isolation des conducteurs comprend la composition réticulée selon la revendication 1.

**16.** Profilé qui comprend la composition réticulée selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108192354 A
- EP 0467800 A1
- US 2016289416 A1
- WO 2007115834 A2
- US 5057151 A
- EP 0359251 A